# EUROPÄISCHE PATENTANMELDUNG

(11) **EP 4 545 844 A1**
(43) Veröffentlichungstag der Anmeldung: **30.04.2025**
(21) Anmeldenummer: 24207208.0
(22) Anmeldetag: 17.10.2024
(51) Int. Cl.: F21S 8/06, F21V 21/15, F21V 21/16, F21V 21/38, A01G 9/02

(54) **SYSTEM MODULARER HÖHENVERSTELLBARER LEUCHTELEMENTE**

(30) Priorität: 26.10.2023 DE 102023129583
(71) Anmelder: Staudt, Daniel, 44879 Bochum (DE); Staudt, Martin, 44787 Bochum (DE)
(72) Erfinder: Staudt, Daniel, 44879 Bochum (DE); Staudt, Martin, 44787 Bochum (DE)
(74) Vertreter: Michalski Hüttermann & Partner Patentanwälte mbB

(57) **Zusammenfassung**

Modul (10), aufweisend:

- eine Deckenhalterung (20)

- eine erste elektronische Steuereinheit (30)

- eine Aufhängung (80), die vorzugsweise als Flachkabel ausgebildet ist, mit einem ersten und einem zweiten Ende, wobei die Aufhängung mit dem ersten Ende (81) an dem Modul (10) befestigt ist

- eine Antriebseinheit (40), welche vorzugsweise ein Schrittmotor ist, die über eine erste Umlenkrolle (60) Bewegung an die Aufhängung (80) übertragen kann, dadurch gekennzeichnet, dass das Modul (10) weiterhin aufweist:

- einen Anhänger (200, 201, 202, 203), der an dem zweiten Ende (82) der Aufhängung (80) befestigt ist, wobei zwischen dem Anhänger (200, 201, 202, 203) und der Befestigung der Aufhängung (80) an dem Modul (10) ein Gegengewicht (150) über eine zweite Umlenkrolle (110) an der Aufhängung (80) befestigt ist,

- einen Abstandssensor (50), der den Abstand zwischen dem Modul (10) und dem Gegengewicht (150) überwacht, und

wobei die elektronische Steuereinheit (30) mit der Antriebseinheit (40) sowie dem Abstandssensor (50) signaltechnisch verbunden ist und dazu eingerichtet ist, über die Antriebseinheit (40) im Wesentlichen vertikale Bewegungsmuster des Anhängers (200, 201, 202, 203) zu erzeugen, dadurch gekennzeichnet, dass die Aufhängung (80) als verformbares Flachkabel ausgestaltet ist.

## Beschreibung

Die vorliegende Erfindung betrifft ein Modul, das eine Deckenhalterung, eine erste elektronische Steuereinheit, eine Aufhängung, die vorzugsweise als Flachkabel ausgebildet ist, mit einem ersten und einem zweiten Ende, wobei die Aufhängung mit dem ersten Ende an dem Modul befestigt ist, und eine Antriebseinheit, welche vorzugsweise ein Schrittmotor ist, aufweist, die über eine erste Umlenkrolle Bewegung an die Aufhängung übertragen kann. Außerdem verfügt das Modul über einen Anhänger, der an dem zweiten Ende der Aufhängung befestigt ist, wobei zwischen dem Anhänger und der Befestigung der Aufhängung an dem Modul ein Gegengewicht über Umlenkrollen an der Aufhängung befestigt ist und einen Abstandssensor, der den Abstand zwischen dem Modul und dem Gegengewicht überwacht. Die elektronische Steuereinheit ist mit der Antriebseinheit sowie dem Abstandssensor signaltechnisch derart verbunden und dazu eingerichtet, über die Antriebseinheit im Wesentlichen vertikale Bewegungsmuster des Anhängers zu erzeugen. Das Bewegungsmuster des Anhängers ist dabei frei definierbar. Ferner betrifft die Erfindung auch ein System, dass mindestens zwei der Module umfasst, die über Kabel miteinander verbunden sind.

Das Konzept des Systems beruht auf dem Zurückbringen beruhigender Bewegungen in reglose Umgebungen. Hintergrund ist das verspürte Wohlbefinden in der Natur durch sanfte Veränderungen, wie etwa im Wind wogende Pflanzen, einher ziehende Wolken oder Licht und Schattenspiele - welche besonders in Innenräumen urbaner Wohnungen und öffentlichen Innenräumen fehlt. Das System ist darauf ausgelegt beruhigende Hintergrundbewegung zu ermöglichen. Der Fokus liegt im ersten Schritt auf Lichtobjekten, ist aber nicht auf diese beschränkt und kann auf unterschiedlichste Anhänger, wie etwa Pflanzen, Kleidung oder anderer Objekte erweitert werden.

Die DE 20 2016 101 262 U1 offenbart eine Pendelleuchte, umfassend - ein Deckenanschlussgehäuse, ein Trägerelement, an dem mindestens eine Leuchteinheit angebracht ist, zwei elektrische Versorgungsleitungen, die sich zwischen dem Deckenanschlussgehäuse und dem Trägerelement erstrecken und elektrisch an die mindestens eine Leuchteinheit angeschlossen sind, um diese während des Betriebs der Pendelleuchte mit elektrischer Energie zu versorgen, eine Wickelvorrichtung, die innerhalb des Deckenanschlussgehäuses untergebracht ist oder an dem Deckenanschlussgehäuse angebracht ist, wobei die beiden elektrischen Versorgungsleitungen mittels der Wickelvorrichtung aufbeziehungsweise abwickelbar sind, und zumindest eine elektromotorische Antriebsvorrichtung, die an die Wickelvorrichtung angeschlossen ist und die dazu eingerichtet ist, das Auf- beziehungsweise Abwickeln der elektrischen Versorgungsleitungen mittels der Wickelvorrichtung gesteuert anzutreiben, dadurch gekennzeichnet, dass die Pendelleuchte zumindest ein Höhenverstellungssensor aufweist, das an die elektrischen Versorgungsleitungen angeschlossen ist und über diese elektrisch mit der elektromotorischen Antriebsvorrichtung verbunden ist und das dazu eingerichtet ist, benutzerinduzierte Höhenverstellsignale zu generieren und für eine Weiterverarbeitung über die elektrischen Versorgungsleitungen zur elektromotorischen Antriebsvorrichtung zu übertragen.

In der DE 20 2021 105 074 U1 ist eine Leuchte, insbesondere Pendelleuchte gezeigt, mit einem Leuchtengehäuse; einer elektrischen Antriebsvorrichtung; und einer Aufhängevorrichtung, über welche das Leuchtengehäuse in einem Deckenabstand aufhängbar ist; dadurch gekennzeichnet, dass der Deckenabstand des Leuchtengehäuses mittels der elektrischen Antriebsvorrichtung veränderbar ist.

In der EP 4 137 739 A1 wird eine höhenverstellbare Leuchtvorrichtung vorgeschlagen, die Folgendes aufweist: mindestens einen Leuchtenkopf, mindestens ein Deckengehäuse, mindestens eine Höheneinstellungseinheit mit mindestens einem Kabel, und mindestens eine Steuereinheit. Die Steuereinheit ist dazu ausgebildet, die Höheneinstellungseinheit derart anzusteuern, dass der Leuchtenkopf in einen ersten und einen zweiten Benutzungszustand versetzbar ist, wobei der Leuchtenkopf in dem ersten Benutzungszustand mittels des mindestens einen Kabels abgehängt ist und eine Pendelleuchte bildet, und der Leuchtenkopf in dem zweiten Benutzungszustand in dem Deckengehäuse versenkt ist und eine versenkte Deckenleuchte bildet.

In der WO 2021 180 798 A1 wird eine höhenverstellbare Pendelleuchte vorgeschlagen, die Folgendes aufweist: einen Leuchtenkopf, eine Deckenbefestigungseinheit, an der der Leuchtenkopf mittels Kabeln abgehängt ist, eine Höheneinstellungseinheit, die in der Deckenbefestigungseinheit angeordnet ist, eine an dem Leuchtenkopf angeordnete Sensoranordnung mit mindestens einem Sensor, wobei der mindestens eine Sensor, als Nahfeldsensor konfiguriert ist, der dazu ausgebildet ist, eine Hand eines Benutzers in Sensornähe zur Erfassung von Gesten als berührungslose Steuerbefehle zu detektieren, und eine Steuereinheit, die in kommunikativer Verbindung mit der Sensoranordnung und der Höheneinstellungseinheit steht. Die Steuereinheit ist konfiguriert, bei Erfassung einer ersten Geste an der Sensoranordnung einen Steuerbefehl zur Veränderung der Position des Leuchtenkopfs in vertikaler Richtung nach oben bzw. unten an die Höheneinstellungseinheit zu senden, und bei Erfassung einer zweiten Geste an der Sensoranordnung einen Steuerbefehl zur Veränderung der Position des Leuchtenkopfs in vertikaler Richtung nach unten bzw. oben an die Höheneinstellungseinheit zu senden; wobei die Höheneinstellungseinheit konfiguriert ist, die Position des Leuchtenkopfs in vertikaler Richtung gemäß der von der Steuereinheit empfangenen Steuerbefehle zu verändern.

CN 2 16 345 850 U offenbart eine Zug-Deckenlampenstruktur, die in der Lage ist, die Höhe einer Lampe einzustellen Die beiden Hülsenstücke sind lösbar mit den Positionen der Positionierungsplatte verbunden, die der inneren Seitenwand des Deckensockels entsprechen; die beiden Rollen sind jeweils in den beiden äußeren Elementen angeordnet; die beiden geflochtenen Seile sind jeweils um die beiden entsprechenden Rollen gewickelt, und die beiden Enden der geflochtenen Seile durchdringen jeweils das äußere Element und die Positionierungsplatte; die Gegengewichtsgruppe ist mit einem Ende der beiden geflochtenen Seile verbunden; die beiden Eisenstangenrohre sind jeweils mit einem von der Gegengewichtsgruppe entfernten Ende des geflochtenen Seils verbunden; der Lampenkörper ist fest mit den beiden Eisenstangenrohren verbunden; die Lampe hat die Vorteile, dass sie bequem zu benutzen ist, eine hohe Flexibilität aufweist, die Höhe des Lampenkörpers bequem eingestellt werden kann und dergleichen.

CN 2 05 261 381 U offenbart eine Lampe, insbesondere eine Hebeleuchte in einer Wand. Es wird eine Hebeleuchte in einer Wand beschrieben, die in der Höhe verstellbar ist, deren Leuchtdichte einstellbar ist und die verschiedenen Möglichkeiten zur Anpassung bietet.

Im bisherigen Stand der Technik ist es so, dass höhenverstellbare Lampen bereits bekannt sind, diese sind aber nicht auf das automatische Abfahren von Bewegungsmustern ausgerichtet. Zudem fehlt es an der Modularität, einer beliebigen Skalierbarkeit, verschiedenen Anhängern und Sensoren.

Ausgehend davon ist es die Aufgabe der vorliegenden Erfindung ein Modul und ein daraus aufgebautes System bereitzustellen, das in der Anzahl der Module beliebig skalierbar ist, automatisiert ein eingestelltes Bewegungsmuster abfahren kann und auch in der Sensorik variabel ist.

Erfindungsgemäß wird ein Modul bereitgestellt, das eine Deckenhalterung, eine erste elektronische Steuereinheit, eine Aufhängung, die vorzugsweise als Flachkabel ausgebildet ist, mit einem ersten und einem zweiten Ende, wobei die Aufhängung mit dem ersten Ende an dem Modul befestigt ist, eine Antriebseinheit, welche vorzugsweise ein Schrittmotor ist, die über eine erste Umlenkrolle Bewegung an die Aufhängung übertragen kann, wobei das Modul weiterhin einen Anhänger aufweist, der an dem zweiten Ende der Aufhängung befestigt ist, wobei zwischen dem Anhänger und der Befestigung der Aufhängung an dem Modul ein Gegengewicht über eine zweite Umlenkrolle an der Aufhängung befestigt ist. Weiter weist das Modul einen Abstandssensor auf, der den Abstand zwischen dem Modul und dem Gegengewicht überwacht. Die elektronische Steuereinheit mit der Antriebseinheit sowie dem Abstandssensor signaltechnisch verbunden ist und dazu eingerichtet ist, über die Antriebseinheit im Wesentlichen vertikale Bewegungsmuster des Anhängers. Das Bewegungsmuster des Anhängers ist dabei frei definierbar.

Es kann bevorzugt vorgesehen sein, dass das Gewicht des Gegengewichtes an das Gewicht des Anhängers bzw. an das Gewicht von an den Anhänger angebrachte bzw. angeschlossene Objekte angepasst werden kann. Dazu kann es insbesondere vorgesehen sein, dass das Gegengewicht mittels einheitlicher Gewichtskörper, insbesondere Gewichtsplatten angepasst werden kann.

Das Modul verfügt über eine Deckenhalterung, die es ermöglicht das Modul sicher an der Decke zu befestigen und die nötige Stabilität für die Konstruktion zu liefern. Die Deckenhalterung kann dabei einstückig oder aus mehreren Teilen aufgebaut sein und in ihrer Form präzise an die Anforderungen angepasst werden. Die Montage an der Decke kann in einer weiteren Ausführungsform mittels zweier an der Decke montierten, leitfähigen Schienen erfolgen. Der Vorteil ist, dass die sonst manuell notwendige Verkabelung zwischen den Systemen entfällt. Jedes System ist mit jeweils einem elektrisch leitfähigen und formschlüssigen Verbindungsmittel, wie beispielsweise einer Schraube in bzw. an beiden Schienen befestigt und wir darüber mit Spannung versorgt. Ebenfalls kass es vorgesehen sein, dass das Modul über die Schienen mit den anderen Modulen kommunizieren kann. Module können so frei entlang der Schienen verschoben und damit einfacher und flexibler angeordnet werden.

Das Modul verfügt über eine elektronische Steuereinheit, die die Steuersignale für das Modul verarbeiten kann. Bei der Verwendung mehrerer Module ist es auch möglich, dass ein Modul, als Master-Modul, über eine elektronische Steuereinheit verfügt, die die Informationen für alle Module empfängt. Die anderen Module sind dann als Slave-Module entweder ohne elektronische Steuereinheit ausgebildet oder die in den weiteren Modulen befindlichen elektronischen Steuereinheiten empfangen Steuersignale vom Master-Modul und verarbeiten diese entsprechend weiter. Insoweit kann die elektronische Steuereinheit des ersten Moduls die weiteren Module unmittelbar oder mittelbar steuern. Das Master-Modul kann zudem ein eigenes Modul sein, welches selbst keine Antriebseinheit, Anhänger o.Ä. beinhaltet und dessen Aufgabe es lediglich ist, die Anbindung an eine App, Lichtschalter o.Ä. zu ermöglichen und darauf basierend die eigentlichen Module anzusteuern.

Das Modul weist eine Kommunikationseinrichtung auf, mittels welcher Steuerbefehle von einem Nutzer an die Steuereinheit übermittelbar sind. Die Signale werden zum Beispiel per Bluetooth über eine App oder einen Wandschalter mit Dimmer weitergegeben. Es sind allerdings auch andere Übertragungswege denkbar. Insoweit weist die Kommunikationseinrichtung Mittel zur drahtlosen oder drahtgebundenen Kommunikation bzw. zum Empfang von Steuerbefehlen eines Nutzers auf.

Die elektronische Steuereinheit selbst steuert due Bewegung vorzugsweise mittels einer programmierbaren Logiksteuerung, wie beispielsweise einer SPS-Steuerung.

Die Aufhängung, die zumindest an einem ersten Ende an dem Modul befestigt ist, ist bevorzugt als Flachkabel ausgebildet, es kann aber jede Art von Kabel verwendet werden. Wenn keine Weitergabe von Signalen an dem Anhänger an die elektronische Steuereinheit nötig oder vorgesehen ist, können auch andere Aufhängungen wie zum Beispiel Seile oder Drähte verwendet werden. Das Kabel sollte dabei flexibel verformbar sein - dafür haben sich Silikonkabel mit bevorzugt besonders feinen Litzen als nützlich herausgestellt. Der Vorteil eines Flachkabels liegt darin, dass der Anhänger rotationsstabil gehalten wird, da das Kabel der Rundung des Laufrades sauber folgt. Wenn darauf kein Wert gelegt wird, können auch andere Kabel, wie Rundkabel oder Ähnliches in Betracht kommen. Weiterhin vorteilhaft ist, dass das Kabel keine dauerhafte Verformung erfährt. Es können in einer weiteren Ausführungsform auch zusätzliche Kabel als Aufhängung verwendet werden, um die anderen Kabel zu entlasten. In der Aufhängung müssen mindestens 2 Leitungen vorliegen, die Spannungsversorgung und Datentransfer gewährleisten. Da die Kommunikation auf die Versorgungsspannung aufmoduliert werden kann, wird keine zusätzliche Leitung für die Kommunikation benötigt. Ebenso kann zusätzlich zum Kabel eine Draht- oder Führungslitze vorgesehen sein, um die Stabilität weiter zu erhöhen. Soweit der Aufhänger einen elektrischen Verbraucher, wie beispielsweise ein Leuchtmittel umfasst, ist die bevorzugte Betriebsspannung ein Gleichstrom mit einer Spannung in einem Bereich von 12V bis 36V, vorzugsweise 24 V, die vom einem in dem Modul vorgesehenen Spannungswandler von einer Netzspannung von 120 oder 240 V Wechselspannung entsprechend umgesetzt werden kann oder in einer vom System unabhängigen Komponente durch ein Standard-Netzteil, wobei diese Spannung, dann von Modul zu Modul weitergegeben wird. Um auch Standard-Leuchtmittel (DC 12V) wie GU4 nutzen zu können und diese ohne Elektronik im Anhänger dimmen zu können, kann die Spannung auf der Leitung variiert werden, beispielsweise in einem Bereich zwischen 0V und 12V, insbesondere zwischen 7V und 12V.

Als Antriebseinheit ist vorzugsweise ein Schrittmotor vorgesehen. Der Schrittmotor des Moduls überträgt über eine erste Umlenkrolle Bewegung an die Aufhängung. Dabei wird die Aufhängung nicht aufgerollt, sondern nur über die Umlenkrollen vor- und zurückgedreht. Für die Umlenkrolle kann hier ein Laufrad nach Industriestandard verwendet werden. In einer alternativen Ausführungsform kann ein Zahnrad verwendet werden. Das Laufrad weist bevorzugt eine kreuzweise geriffelte Textur auf. Der Vorteil der vorliegenden Erfindung mit Laufrad liegt in einer erhöhten Reibung und gewährleistet Verdrehschutz des Kabels, das Verhältnis von Friktion und Führung ist dabei ausgewogen. Eine kreuzförmige Riffelung sorgt für ein gleichmäßiges Abrollen des Kabels, da das Kabel kontinuierlich und gleichzeitig symmetrisch zur Mitte von der Laufrolle abrollt. Dieser Effekt ist bei einer geraden oder diagonalen Riffelung nicht gegeben. Der Schrittmotor ist bevorzugt in dem Modul angeordnet, er kann in einer alternativen Ausführungsform auch im Anhänger angeordnet sein.

Der Anhänger ist an der Aufhängung an dem zweiten Ende über einen Anschluss befestigt und ist bevorzugt als Leuchtmittel ausgestaltet. Es kommt aber jede Art von Anhänger in Betracht, als nicht beschränkende Beispiele zu nennen sind Pflanzkörbe, Kleideraufhängungen oder Linsen. Bevorzugt ist vorgesehen, dass das Modul über den Anschluss erkennt, welcher Anhänger befestigt ist und somit auch welche Art von Datentransfer benötigt wird. Der Anschluss ist bevorzugt als Bajonettverschluss ausgebildet, da dieser den Austausch der Module vereinfacht. Es können auch weitere Sicherungsmechanismen vorgesehen sein, die die Vorschriften der DGUV 17 BGV C1 erfüllen. Der Anhänger kann in einer bevorzugten Ausführungsform auch noch zusätzlich beschwert sein, damit die Bewegung des Anhängers ruhig verläuft, was bei sehr leichten Anhängern nicht immer gewährleistet werden kann. Das bevorzugte Mindestgewicht liegt bei > 250 g.

In dem Anschluss können insoweit Kontakte zur Signal- und/oder Spannungsübertragung zwischen dem jeweils an den Anhänger angeschlossenen Objekt und dem Modul vorgesehen sein. Dabei können für die Anschlüsse verschiedene Konnektoren vorgesehen, die für eine erhöhte Montagesicherheit sorgen, sodass kein Fachmann für die Montage benötigt wird.

Eine Signalübertragung zwischen den an dem Anhänger angeschlossenen Objekten und dem Modul kann dabei vorzugsweise über eine spannungsführende Leitung der Aufhängung erfolgen, beispielsweise und bevorzugt mittels Pulslängenmodulation, Pulsbreitenmodulation, oder insbesondere Pulsweitenmodulation. Bevorzugt kann es vorgesehen sein, dass eine serielle Kommunikationsschnittstelle vorgesehen ist, wie beispielsweise RS-485, RS-422 oder RS-232.

Das Modul verfügt über einen Abstandssensor, der den Abstand zum Gegengewicht überwacht. Es hat sich als besonders vorteilhaft herausgestellt, da auch bei manueller Verstellung des Anhängers der Verfahrensweg eindeutig bestimmt werden kann und das System so wenig fehleranfällig ist. Dies gilt vor allem als vorteilhaft im Vergleich zu einer Abstandsbestimmung über den Schrittmotor. In einer weiteren Ausführungsform kann auch ein Sensor in dem Anhänger angeordnet sein, der verschiedene Umgebungsparameter erfassen kann. Bei einem weiteren Abstandssensor könnte das Modul auf Veränderungen der Umgebung reagieren. Ebenso kann der Anhänger über eine zusätzliche elektronische Steuereinheit verfügen, was dazu führt, dass die Anhänger mehr Funktionalität erhalten und eigenständig austauschbar sind, und die Instandhaltung einfacher gestaltet.

Das Modul verfügt über ein Gegengewicht, das über eine zweite Umlenkrolle an der Aufhängung befestigt ist. Das Gegengewicht ist bevorzugt doppelt so schwer, wie der Anhänger um eine lastfreie und damit für den Motor nahezu drehmomentfreie Bewegung zu ermöglichen und liefert weiterhin den Vorteil einer ruhigen Bewegung und einer zuverlässigen Messung des Abstands in Kombination mit dem Abstandssensor. Dies sorgt auch dafür, dass Element und Gegengewicht im ausgeschalteten Zustand still stehen bleiben, von Hand aber leicht in der Höhe verstellt werden können. In einer weiteren Ausführungsform kann das Gegengewicht auch als zweiter Anhänger ausgestaltet sein.

Die Bewegung des Anhängers kann frei konfiguriert werden. In einer weiteren Ausführungsform wird die Steuerung der Bewegung über eine Logiksteuerung vorgenommen. Die Bewegung kann dabei stetig ausgeführt werden oder auch zumindest vorrübergehend eingestellt werden. Bei der Bewegung erfährt der Anhänger den doppelten Verfahrensweg im Vergleich zum Gegengewicht. Wenn das Gegengewicht als weiterer Anhänger ausgebildet ist, können auch andere Verfahrenswege möglich sein. Die Geschwindigkeit der Bewegung kann in einer weiteren Ausführungsform an weitere Eigenschaften des Anhängers gekoppelt sein. Beispielsweise können bei einem Leuchtmittel als Anhänger, die Geschwindigkeit der Bewegung und die Helligkeit gekoppelt sein. Die bevorzugte Bewegungsgeschwindigkeit bei standardisierten Deckenhöhen zwischen 2,20 und 3 m liegt bei 0.02 m/s ± 0.005 m/s. Bei höheren Räumen wird der Faktor der Raumgröße mit dem Geschwindigkeitswert multipliziert. Doppelte Raumhöhe = Doppelte Geschwindigkeit. Alle steuerbaren Parameter des Systems lassen sich einzeln einstellen, oder aber in Abhängigkeit anderer Parameter einstellen.

Ferner betrifft die Erfindung auch ein System, dass mindestens zwei der Module umfasst, die miteinander verbindbar sind. Das weist das Modul ein signaltechnisches Kopplungsmittel auf. Das signaltechnische Kopplungsmittel kann dabei eine drahtgebundene und/oder drahtlose Kommunikation zwischen den Modulen (10) ermöglichen.

In dem System kann es vorgesehen sein, dass die elektronische Steuereinheit eines ersten Moduls die Bewegungsmuster aller weiteren Module mittelbar oder unmittelbar steuert.

Die Steuerbefehle zwischen den Modulen können dabei mittels eines proprietären oder nichtproprietären Protokolls übermittelt werden. Beispiele für nicht-proprietäre Protokolle sind DMX, TCP/IP, KNX, oder EIB.

Die Module sind im System frei in der Anordnung und die Anzahl der Module im System beliebig skalierbar. Die Module erkennen intelligent ihre Position im System. Eine Verbindung der Module im System ohne Kabel über eine drahtlose Verbindung stellt eine weitere Ausführungsform dar, die weitere Flexibilität bei der Gestaltung liefert. Die Module können auch in einem Gehäuse Platz finden. Mindestens eines der Module im System kann auch Verbindung zu unterschiedlichen kabelgebundenen und kabellosen externen Kommunikationsschnittstellen, wie beispielsweise Home-Automatisation-Bussysteme, ZigBee, WLAN oder Bluetooth (BLE) herstellen.

### Figurenbeschreibung

Fig. 1 zeigt ein Modul in drei verschiedenen Ansichten.
Fig. 2 zeigt Einzelteile des Moduls in Detailansicht.
Fig. 3 zeigt Skalierbarkeit (links) und Bewegung (rechts) des Systems.
Fig. 4 zeigt die Flexibilität des Layouts des Systems.
Fig. 5 zeigt das System mit verschiedenen Ausführungen der Anhänger.
Fig. 6 zeigt den Anschluss und Bajonettverschluss des Anhängers zur Aufhängung.
Fig. 7 zeigt die Sensorik im Leuchtmittel.

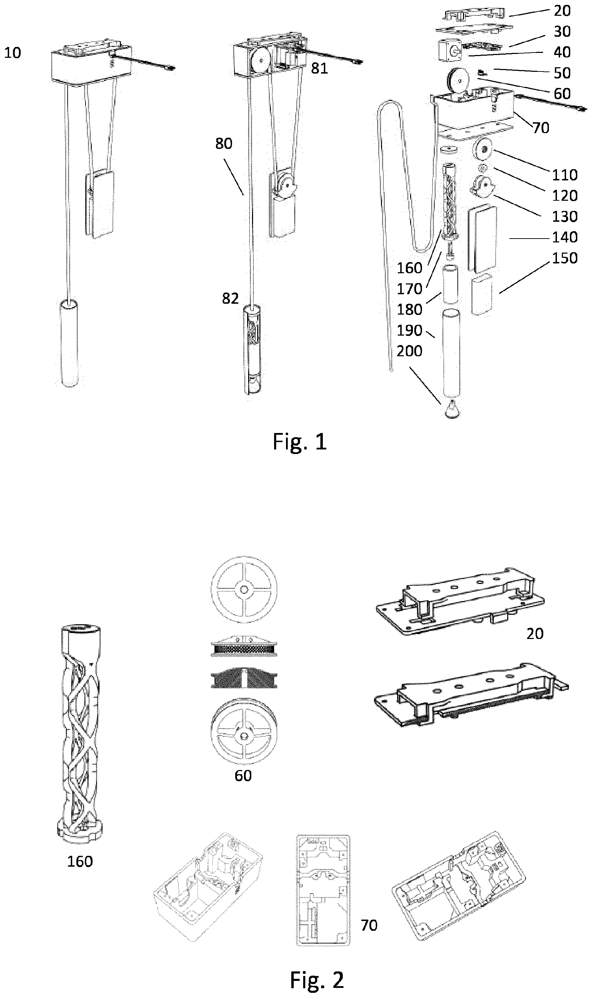

Fig. 1 zeigt das Modul 10 in verschiedenen Ansichten. Links ist das vollständige Modul 10 dargestellt, mittig ist das Modul 10 mit der Aufhängung 80 und dem ersten 81 und zweiten Ende 82 der Aufhängung im Detail dargestellt und rechts sind die Einzelteile des Moduls 10 abgebildet. Das Deckengehäuse 70 des Moduls 10 enthält eine elektronische Steuereinheit 30, den Schrittmotor 40, den Abstandssensor 50 und die erste Umlenkrolle 60. Über die Aufhängung 80 daran befestigt ist das Gegengewicht 150 in einem Gehäuse 140, darüber die zweite Umlenkrolle 110 mit Kugellager 120 und der Verschalung 130. An dem zweiten Ende der Aufhängung 82 ist der Anhänger angeordnet, der hier ein Kerngehäuse 160 mit Leuchtmittel Aufnahme 170 aufweist, die mit dem Gewicht 180 in dem Lampengehäuse 190 angeordnet ist, der über ein Leuchtmittel 200 verfügt.

Figur 2 zeigt Detailansichten, der Umlenkrolle 60, des Kerngehäuses 160, der Deckenhalterung 20 und dem Deckengehäuse 70.

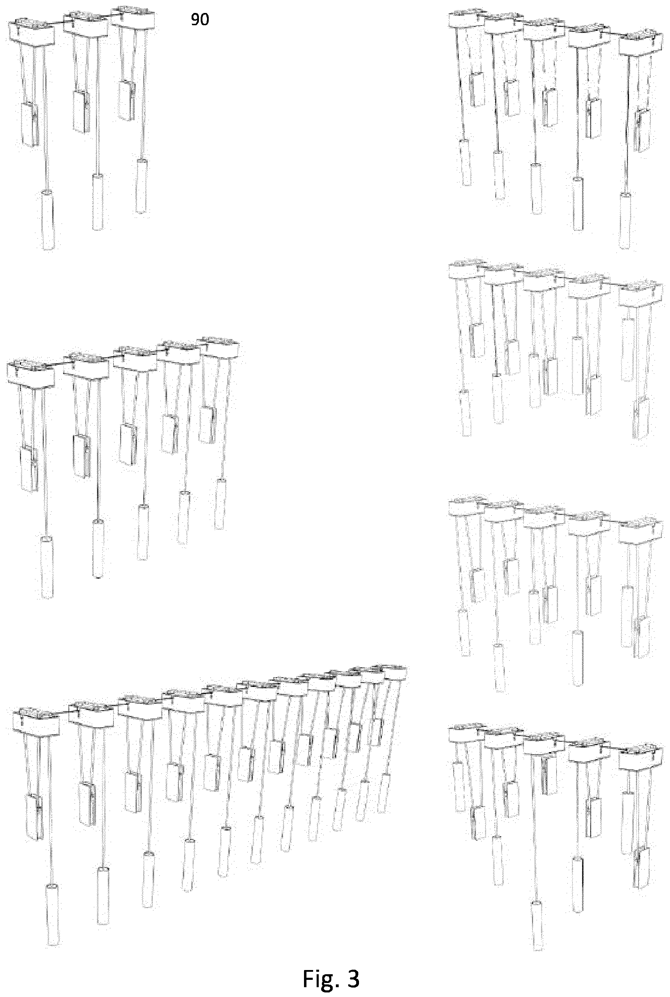

Figur 3 zeigt das System 90 bestehend aus mehreren Modulen 10. Auf der linken Seite sind Systeme mit 3, 5 und 12 Modulen dargestellt. Auf der rechten Seite wird modellhaft die Bewegung von Anhänger und Gegengewicht 150 über verschiedene Positionen dargestellt.

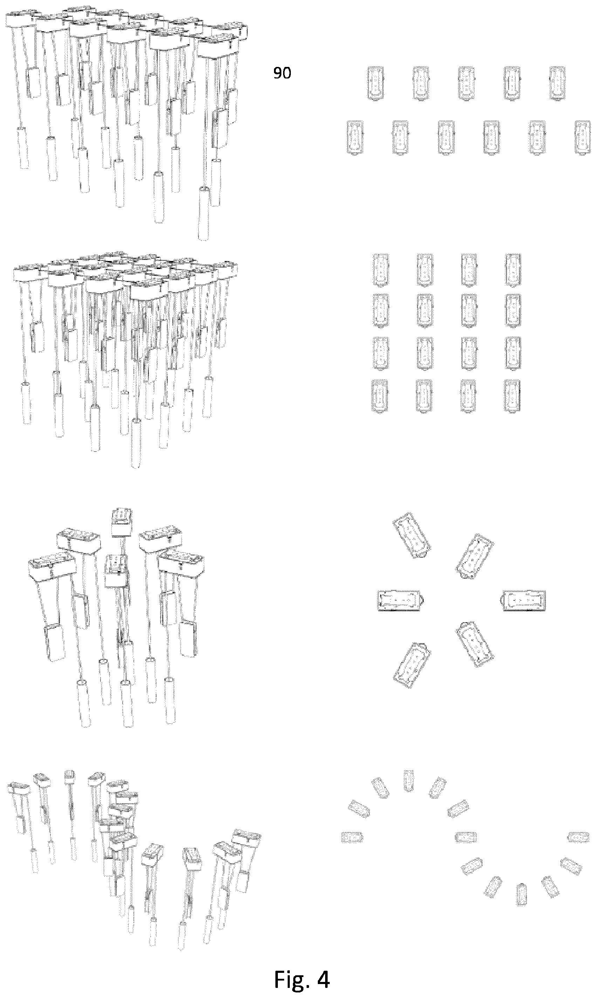

Figur 4 stellt Beispiele für die Anordnung der Module 10 im System 90, die in verschiedensten Orientierungen möglich sind.

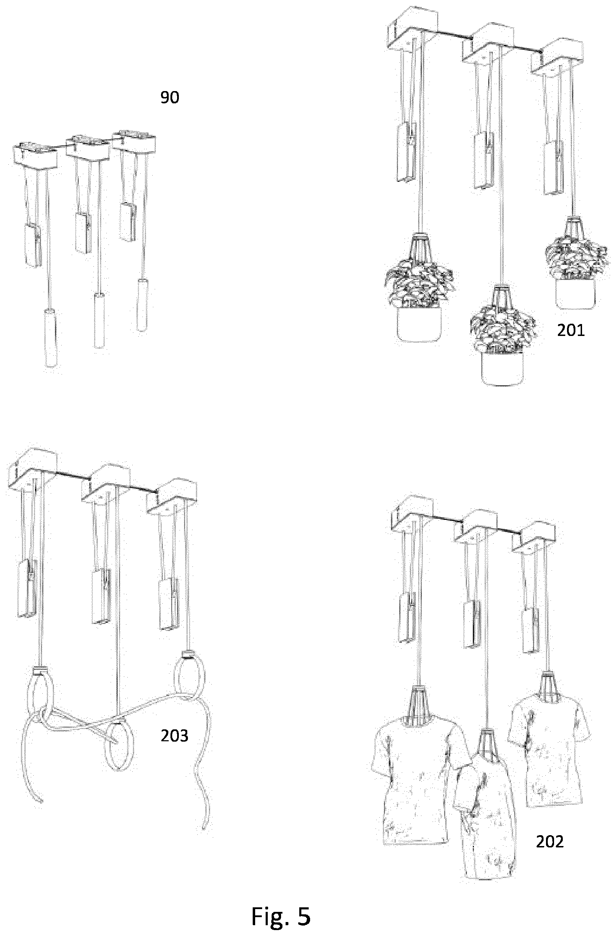

Figur 5 zeigt das System 90, wobei an den Modulen 10 verschiedene Anhänger angebracht sind. Oben links ist das ein Leuchtmittel 200, oben rechts Pflanzkörbe 201, unten rechts Kleideraufhängungen 202 und unten links ein Dekorationselement 203.

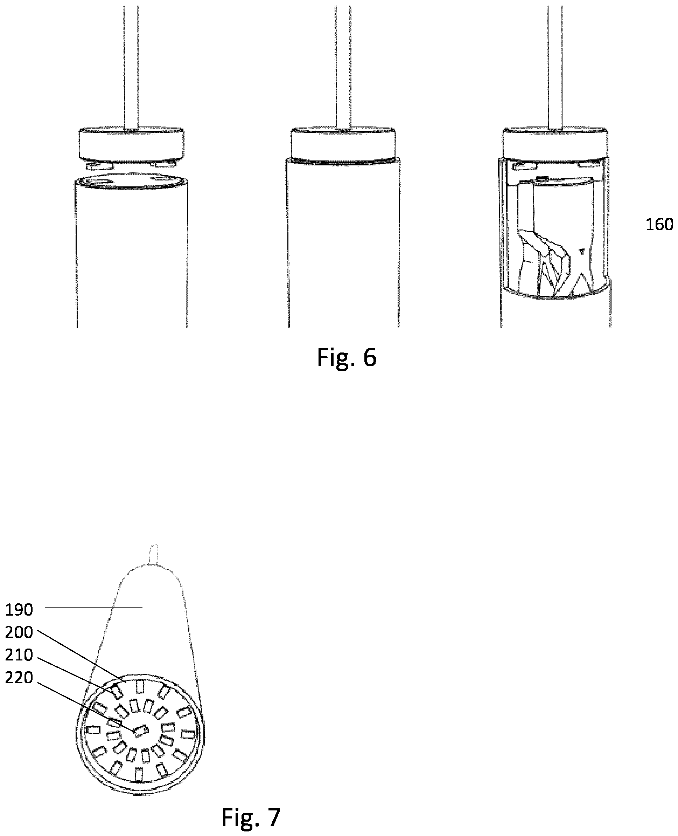

Figur 6 zeigt den Anschluss der an dem zweiten Ende der Aufhängung 80 angebracht ist und den Anhänger mittels eines Bajonettverschlusses an der Aufhängung befestigt.

Figur 7 stellt eine Ausführungsform dar, bei dem das Leuchtmittel 220 weitere Sensorik, hier einen Sensor 220 enthält und über LEDs 210 verfügt.

### Bezugszeichenliste

- 10: Modul
- 20: Deckenhalterung
- 30: elektronische Steuereinheit
- 40: Schrittmotor
- 50: Abstandssensor
- 60: Erste Umlenkrolle
- 70: Gehäuse Deckenstation
- 80: Aufhängung
- 81: Erstes Ende der Aufhängung
- 82: Zweites Ende der Aufhängung
- 90: System
- 110: Zweite Umlenkrolle
- 120: Kugellager
- 130: Verschalung Umlenkrolle
- 140: Gehäuse Gegengewicht
- 150: Gegengewicht
- 160: Kerngehäuse
- 170: Leuchtmittel Aufnahme
- 180: Gewicht
- 190: Lampengehäuse
- 200: Leuchtmittel
- 201: Pflanzkorb
- 202: Kleideraufhängung
- 203: Dekorationselement
- 210: LED
- 220: Sensor

## Patentansprüche

1. Modul (10), aufweisend:
- eine Deckenhalterung (20)
- eine erste elektronische Steuereinheit (30)
- eine Aufhängung (80), die vorzugsweise als Flachkabel ausgebildet ist, mit einem ersten und einem zweiten Ende, wobei die Aufhängung mit dem ersten Ende (81) an dem Modul (10) befestigt ist
- eine Antriebseinheit (40), welche vorzugsweise ein Schrittmotor ist, die über eine erste Umlenkrolle (60) Bewegung an die Aufhängung (80) übertragen kann, **dadurch gekennzeichnet, dass** das Modul (10) weiterhin aufweist:
- einen Anhänger (200, 201, 202, 203), der an dem zweiten Ende (82) der Aufhängung (80) befestigt ist, wobei zwischen dem Anhänger (200, 201, 202, 203) und der Befestigung der Aufhängung (80) an dem Modul (10) ein Gegengewicht (150) über eine zweite Umlenkrolle (110) an der Aufhängung (80) befestigt ist,
- einen Abstandssensor (50), der den Abstand zwischen dem Modul (10) und dem Gegengewicht (150) überwacht, und
wobei die elektronische Steuereinheit (30) mit der Antriebseinheit (40) sowie dem Abstandssensor (50) signaltechnisch verbunden ist und dazu eingerichtet ist, über die Antriebseinheit (40) im Wesentlichen vertikale Bewegungsmuster des Anhängers (200, 201, 202, 203) zu erzeugen, **dadurch gekennzeichnet, dass** die Aufhängung (80) als verformbares Flachkabel ausgestaltet ist.

2. Modul (10) nach Anspruch 1, **dadurch gekennzeichnet, dass** die die Steuereinheit (50) eine Kommunikationseinrichtung aufweist, mittels welcher Steuerbefehle von einem Nutzer an die Steuereinheit übermittelbar sind.

3. Modul (10) nach einem der vorhergehenden Ansprüche, **dadurch gekennzeichnet, dass** die Steuerung der Bewegung über die Steuereinheit (50) mittels einer Logiksteuerung erfolgt.

4. Modul (10) nach einem der vorhergehenden Ansprüche, **dadurch gekennzeichnet, dass** der Anhänger (200, 201, 202, 203) austauschbar über vorzugsweise einen Bajonettverschluss an der Aufhängung (80) befestigbar ist.

5. Modul (10) nach einem der vorhergehenden Ansprüche, **dadurch gekennzeichnet, dass** der Anhänger (200, 201, 202, 203) über einen Sensor (220) und/oder eine elektronische Steuereinheit verfügt, wobei der Sensor (220) und die Steuereinheit des Anhängers (200, 201, 202, 203) signaltechnisch mit der Steuereinheit (30) des Moduls (10) verbunden sind.

6. Modul (10) nach einem der vorhergehenden Ansprüche, **dadurch gekennzeichnet, dass** der Anhänger (200, 201, 202, 203) beschwert ist, vorzugsweise mittels eines austauschbaren Gewichtes.

7. Modul (10) nach einem der vorhergehenden Ansprüche, **dadurch gekennzeichnet, dass** die Aufhängung (80) als Silikonkabel ausgestaltet ist.

8. Modul (10) nach einem der vorhergehenden Ansprüche, **dadurch gekennzeichnet, dass** die Aufhängung über mindestens eine Drahtlitze verfügt.

9. Modul (10) nach einem der vorhergehenden Ansprüche, **dadurch gekennzeichnet, dass** der Anhänger als Leuchtmittel (200) ausgebildet ist.

10. Modul (10) nach einem der vorhergehenden Ansprüche, **dadurch gekennzeichnet, dass** der Anhänger als Pflanzkorb (201) ausgebildet ist, der dazu geeignet ist Pflanzen aufzunehmen.

11. Modul (10) nach einem der vorhergehenden Ansprüche, **dadurch gekennzeichnet, dass** der Anhänger als Kleideraufhängung (202) ausgebildet ist.

12. System (90) umfassend mindestens zwei Module (10) nach einem der vorhergehenden Ansprüche, wobei die Module (10) ein signaltechnisches und/oder spannungstechnische Kopplungsmittel aufweisen, mittels welchem die Module signaltechnisch und/oder hinsichtlich ihrer Versorgungsspannung miteinander verbindbar sind.

13. System (90) nach Anspruch 10, **dadurch gekennzeichnet, dass** signaltechnische Kopplungsmittel eine drahtgebundene und/oder drahtlose Kommunikation zwischen den Modulen (10) ermöglicht.

14. System (90) nach einem der Ansprüche 10 bis 13, **dadurch gekennzeichnet, dass** die elektronische Steuereinheit eines ersten Moduls die Bewegungsmuster aller weiteren Module mittelbar oder unmittelbar steuert.

15. System (90) nach einem der Ansprüche 10 bis 14, **dadurch gekennzeichnet, dass** die Steuerbefehle zwischen den Modulen (10) mittels eine proprietären oder nichtproprietären Protokolls übermittelt werden.
